Europäisches Patentamt

European Patent Office

Office européen des brevets

(11) Publication number: **0 067 700**
A1

# EUROPEAN PATENT APPLICATION

(21) Application number: 82303073.9

(22) Date of filing: 14.06.82

(51) Int. Cl.³: **F 02 F 1/42**

(30) Priority: 15.06.81 US 273745

(43) Date of publication of application:
22.12.82 Bulletin 82/51

(84) Designated Contracting States:
AT BE CH DE FR GB IT LI SE

(71) Applicant: DEERE & COMPANY
1 John Deere Road
Moline Illinois 61265(US)

(72) Inventor: Manson, Rex LaVerne
615 7th Avenue, SW
Independence Iowa 50644(US)

(72) Inventor: Satterlee, LeRoy Kenneth
1604 Huntington Road
Waterloo Iowa 50701(US)

(74) Representative: Pears, David Ashley et al,
REDDIE & GROSE 16 Theobalds Road
London WC1X 8PL(GB)

(54) Internal combustion engine with helical intake port.

(57) A helical intake port (16) in the cylinder head of an internal combustion engine has a long, shallow helical ramp portion (24) for producing a substantial amount of swirl of the incoming air at relatively small valve openings. The helical ramp portion extends around the valve stem (30) through an angle of say 255° and has a slope which is no greater than about 15° through at least its last 200°. The smooth flow of air from an upstream, back portion (18) of the port into the helical ramp portion and the subsequent swirling motion are enhanced by a diverter fence formed by a side wall of the back portion which terminates at a location adjacent and spaced apart from the valve stem and extending in a direction at the termination thereof so as to cause air travelling along the side wall to bypass the valve stem as it enters and circulates around the helical ramp portion. As the valve opening increases, the amount of swirling air introduced into the cylinder from the port is increased as large amounts of air within the port begin to bypass the helical ramp portion and flow directly into the cylinder. Such action at relatively large valve openings is enhanced by a top surface of the port opposite the cylinder head which narrows into a groove of generally V-shaped cross-section as it leaves the back portion (18) and enters the helical ramp portion (24) of the port.

FIG. 1

- 1 -

## INTERNAL COMBUSTION ENGINE
## WITH HELICAL INTAKE PORT

It is known to provide helical or swirl intake ports at the cylinder heads of internal combustion engines. Such ports which typically have a valve mounted in a helical ramp portion thereof impart a swirling motion to incoming air as the air flows through the port and into the cylinder. The swirling motion imparted to the air has been found to enhance the mixing of the air with fuel and eventual ignition of the mixture.

Examples of known helical or swirl intake ports are provided by U.S. Patents 3,008,458; 3,890,949, 3,945,363; and 4,078,530 and United Kingdom Patents 838,196; 844,352; 1,061,528 and 1,089,121.

While helical or swirl intake ports of the type described in the above-noted patents provide for improved engine operation when compared with certain other types of intake ports, there is still considerable room for improvement. A principal shortcoming of many known helical intake ports, for example, lies in their inability to optimize swirling motion throughout the entire range of valve openings. As the piston undergoes a down stroke from the top dead centre position so as to undergo movement away from the cylinder head, the valve opening increases and greater amounts of air flow into the cylinder from the intake port. It is generally desirable for the air entering the cylinder to undergo a substantial amount of swirling motion over the entire range of valve openings. Swirling motion at large valve openings is not too difficult to provide since the speed and volume of entering air is usually great enough to impart substantial swirling motion with even a moderate helical shape at the end of the intake port. However, at smaller valve openings where the speed and volume of the incoming air are considerably less, swirling motion is difficult to achieve. This is apparently due to a number of factors which are difficult to carefully analyze in terms of actual engine operation due to the general inaccessibility of the intake ports and the very rapidly changing conditions therein and within the cylinders during operation of the engine. However, it is thought that impairment of swirling motion at different valve openings and particularly at smaller openings may be due to air striking the valve stem or other obstacles within the port, thereby creating substantial air turbulence. The shortcomings of prior art intake ports may also be due to such things as the size and configuration of the helical ramp portion of the port. Failure to impart an adequate amount of swirling motion to the incoming air at small valve openings may provide some operational inefficiency at the particular instant, but leads to even greater inefficiency as the valve opening increases with accompanying acceleration of the piston. This is apparently due to the inability of known intake ports to meet the demand for ever increasing volumes of air entering the cylinder in a swirling motion.

The present invention seeks to provide a helical intake port which imparts a substantial amount of swirling motion to the incoming air throughout the entire range of valve openings. The invention is defined in the claims below but preferably makes use of a combination of features within the port which allow substantial swirling motion to occur at small valve openings and to continue to occur with increasing valve openings despite the accompanying demand for substantially greater volumes of air and at substantially greater input speeds.

Firstly, the helical intake port has an upstream or back portion located to receive incoming air and which converges into a helical ramp portion. The helical ramp portion, which terminates at the cylinder head has a substantial length around the central axis ti reof where the valve stem is located and at the same time a relatively small or shallow slope. At relatively small valve openings, incoming air from the back portion of the port is forced to travel around substantially the entire length of the helical ramp portion before entering the cylinder. The result is that air enters the cylinder with a substantial amount of swirling motion despite the small valve opening. The helical ramp portion extends around the central axis thereof and the included valve stem through an angle which is not substantially less than about 255 degrees. This angular length is significantly greater than the angular length of the helical ramp portions of prior art ports, and combines with other features of the intake port to provide the desired results. The slope of the helical ramp portion is preferably no greater than about 15 degrees through at least the last 200 degrees of the helical ramp portion before it terminates at the cylinder head. The shallowness of the ramp portion combines with the extended length thereof to prevent significant turbulence caused by air striking the back side of the valve while at the same time forcing the air through the small valve opening with a substantial amount of swirling motion.

As the valve opening continues to increase with an accompanying demand for increasing volumes of air, the relatively steep back portion of the port combines with other features thereof so as to cause large portions of the incoming air to bypass the helical ramp portion and flow directly through the valve opening and into the cylinder. Under such conditiors the shape of the helical ramp portion is sufficient to impart a substantial amount of swirling motion to the incoming air.

The swirling motion of incoming air, particularly at larger valve openings, is enhanced by the configuration of the top surface of the port opposite the c linder head. The top surface narrows into a groove as it leaves the back portion and enters the helical ramp portion. The groove has a generally V-shaped cross-section where it enters the helical ramp portion and begins to extend around the valve stem. This configuration directs the air stream out of the port and onto the cylinder wall in such a way as to augment the swirling motion initiated in the port at the smaller valve openings.

Swirling motion of the incoming air at all valve openings is enhanced by a diverter fence formed by one of the side walls of the port. One of the side walls of the port is curved through the back portion and terminates at a location adjacent and spaced apart from the valve stem. The direction of the side wall at its point of termination is to the side of the valve stem so as to direct incoming air flowing along the side wall around and away from the valve stem as it enters and begins to circulate through the helical ramp portion. Directing the incoming air in this manner minimizes the turbulence that would occur if the air were allowed to strike the valve stem. The opposite side wall which has a generally S-shaped configuration curves through the back portion and then reverses its direction of curvature as it enters the helical ramp portion so as to extend around the valve stem and then terminate in a sharp edge at the point of termination of the first side wall. This configuration allows any air circulating in the helical ramp portion which does not exit into the cylinder to smoothly join with incoming air flowing from the back portion into the diverter fence portion.

## Brief Description of the Drawings

The foregoing and other objects, features and advantages of the invention will be apparent from the following more particular description of a preferred embodiment of the invention, as illustrated in the accompanying drawings, in which:

Fig. 1 is a per pective view of a cylinder having a valve and piston therein and a helical intake port in accordance with the invention;

Fig. 2 is a front view of the intake port of Fig. 1 with the valve omitted for simplicity of illustration;

Fig. 3 is a bottom view of the intake port of Fig. 1 with the valve omitted for simplicity of illustration;

Fig. 4 is a right side view of the intake port of Fig. 1 with the valve omitted for simplicity of illustration;

Fig. 5 is a left side view of the intake port of Fig. 1 with the valve omitted for simplicity of illustration;

Fig. 6 is a view, partly in section, taken along the line 6-6 of Fig. 4;

Fig. 7 is a sectional view of the helical ramp portion of the intake port of Fig. 1 taken along the line 7-7 of Fig. 3;

Fig. 8 is a sectional view of the helical ramp portion of the intake port of Fig. 1 taken along the line 8-8 of Fig. 3;

Fig. 9 is a front view of the intake port of Fig. 1, which view is similar to that of Fig. 2 but shows the valve at a relatively small opening and the corresponding pattern of air flow through the port;

Fig. 10 is a bottom view of the port and valve of Fig. 9 with the end of the valve removed for clarity of illustration and the valve stem shown in section;

Fig. 11 is a left side view of the port and valve of Fig. 9;

Fig. 12 is a sectional view of the intake port of Fig. 9 taken along the line 12-12 of Fig. 11;

Fig. 13 is a front view of the intake port of Fig. 1, which view is similar to that of Fig. 2 but shows the valve with a relatively large opening and the corresponding pattern of air flow through the intake port;

Fig. 14 is a bottom view of the port and valve of Fig. 13 with the end of the valve removed for clarity of illustration and the valve stem shown in section;

Fig. 15 is a left side view of the port and valve of Fig. 13; and

Fig. 16 is a sectional view of the intake port of Fig. 13 taken along the line 16-16 of Fig. 14.

## Detailed Description

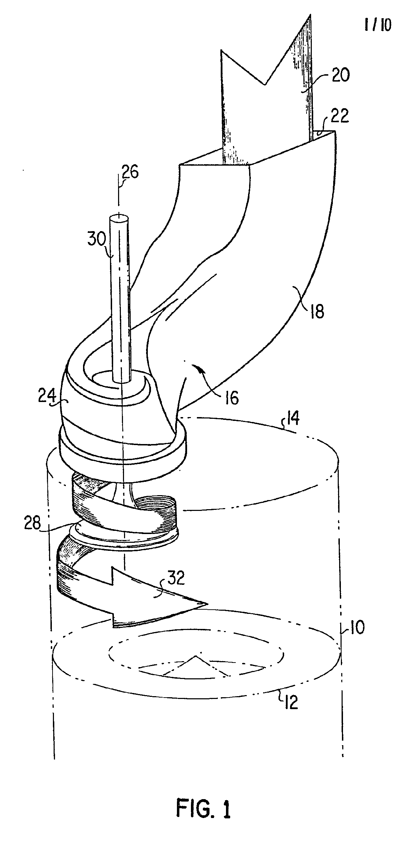

Fig. 1 depicts a cylinder 10 which is shown in dotted outline and which receives a piston 12 therein, the piston 12 also being shown in dotted outline. The cylinder 10 terminates in a cylinder head 14 which is generally planar in shape. Coupled to the cylinder head 14 is a helical intake port 16 in accordance with the invention. The port 16 is comprised of a back portion 18 for receiving incoming air represented by an arrowtail 20 and which enters the back portion 18 at an opening 22. The back portion 18 converges into a helical ramp portion 24 of the port 16. The helical ramp portion 24 has a central axis 26 and terminates at the cylinder head 14. A valve 28 is mounted within the helical ramp portion 24 at the cylinder head 14 and has a stem 30 thereof extending along the central axis 26 within the helical ramp portion 24.

The arrowtail 20 represents air entering the opening 22 in the back portion 18 of the port 16. Such air flows through the back portion 18 and then into the helical ramp portion 24 where a spiraling motion or swirl is imparted to the air. As shown by the arrowhead 32 of Fig. 1 the swirling air from the helical ramp portion 24 flows over the upper surface of the valve 28 and then into the cylinder 10. The air within the cylinder 10 continues to undergo swirling motion. It is this motion which enhances the operation and efficiency of the internal combustion engine as fuel is eventually mixed with the swirling air and ignited.

The valve 28 is shown in an open position relative to the helical ramp portion 24 in Fig. 1. When the piston 12 is in a top dead center position, continued rotation of the crankshaft begins to pull the piston downwardly and away from the cylinder head 14 as viewed in Fig. 1. At the same time the valve 28 begins to open, at first by a relatively small amount and then by larger and larger amounts. As the crankshaft rotates into a position 90 degrees removed from its top dead center position for the piston 12, the piston 12 accelerates in the downward direction and the valve 28 continues to open by greater amounts to allow increasing volumes of air into the cylinder 10. As described in detail hereafter the intake port 16 is configured to provide a substantial amount of swirling motion to the air as it enters the cylinder 10 through a small opening of the valve 28. This swirling motion is continued without interruption due to turbulence or other factors as the accelerating downward movement of the piston 12 requires increasing volumes of air being drawn into the cylinder 10 at increasing speeds with the accompanying increase in the opening of the valve 28. When the valve 28 reaches relatively large openings, substantial quantities of air enter the cylinder 10 at high speeds and continue to undergo the desired swirling motion within the cylinder 10.

The intake port 16 is illustrated in Fig. 1 and in most of the other figures of drawing as a solid or positive object for clarity and convenience of illustration and description. In this connection it should be remembered that the intake port 16 is in actuality an aperture or hole in an otherwise solid mass of material, specifically the head of the internal combustion engine. Thus, as viewed in Fig. 1 the cylinder 10 is in actuality a cylindrical hole or aperture within the engine block and the intake port 16 is an aperture or hole within one of the heads of the internal combustion engine.

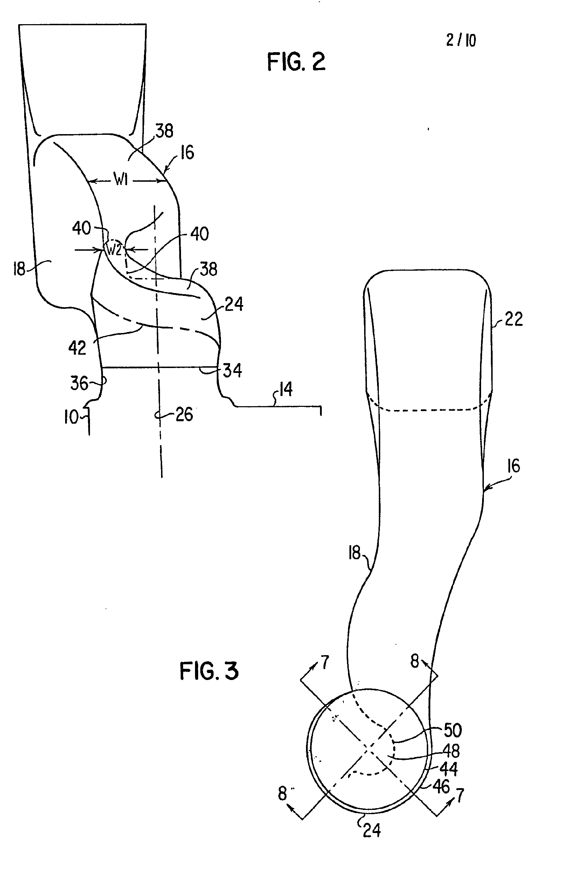

Fig. 2 is a front view of the intake port 16 without the valve 28 and in conjunction with the top part of the cylinder 10. The lower extremity of the intake port 16 where the helical ramp portion 24 couples to the cylinder head 14 is represented in Fig. 2 by a base line 34. The valve 28 normally seats in an opening 36 which couples the intake port 16 to the cylinder 10.

As seen in Fig. 2 the intake port 16 has a top surface 38 opposite the cylinder head 14 which extends through the back portion 18 and into the helical ramp portion 24. At a point midway through the back portion 18, the top surface 38 has a width $w_1$ as illustrated in Fig. 2. The width of the top surface 38 decreases to a considerably smaller width $w_2$ illustrated in Fig. 2 as the surface 38 extends from the back portion 18 into the helical ramp portion 24. A dotted line 40 in Fig. 2 represents the cross-sectional shape of the top surface 38 which, as will be seen, is almost V-shaped at the point where the surface 38 enters the helical ramp portion 24. As will become more fully apparent from the following discussion with reference to other figures of the drawing this cross-sectional shape of the top surface 38 and the offsetting thereof relative to the central axis 26 along which the valve stem 30 lies serves to direct the air around the valve in a generally nonturbulent fashion and very quickly through the helical ramp portion 24 at large valve openings.

As the top surface 38 extends through the helical ramp portion 24, it defines the general shape and the slope of the helix of the ramp portion 24. The central portion of the helical ramp portion 24 extends outwardly to a point of maximum diameter represented by a dashed line 42.

A bottom view of the intake port 16 is depicted in Fig. 3. As seen in Fig. 3 the helical ramp portion 24 of the intake port 16 terminat s in a generally circular opening 44 at the base line 34 shown in Fig. 2 and in which the valve 28 is seated. The dashed line 42 of Fig. 2 which corresponds to the portion of greatest diameter of the helical ramp portion 24 corresponds to a solid line 46 shown in Fig. 3. The dotted line 40 of Fig. 2 which traces the cross-sectional shape of the top surface 38 also defines a mound 48 in the top surface 38 at the center of the helical ramp portion 24. The outline of the mound 48 is depicted by a dashed line 50 in Fig. 3. As shown in some of the other figures of the drawing the mound 48 has an aperture therethrough for receiving the stem 30 of the valve 28.

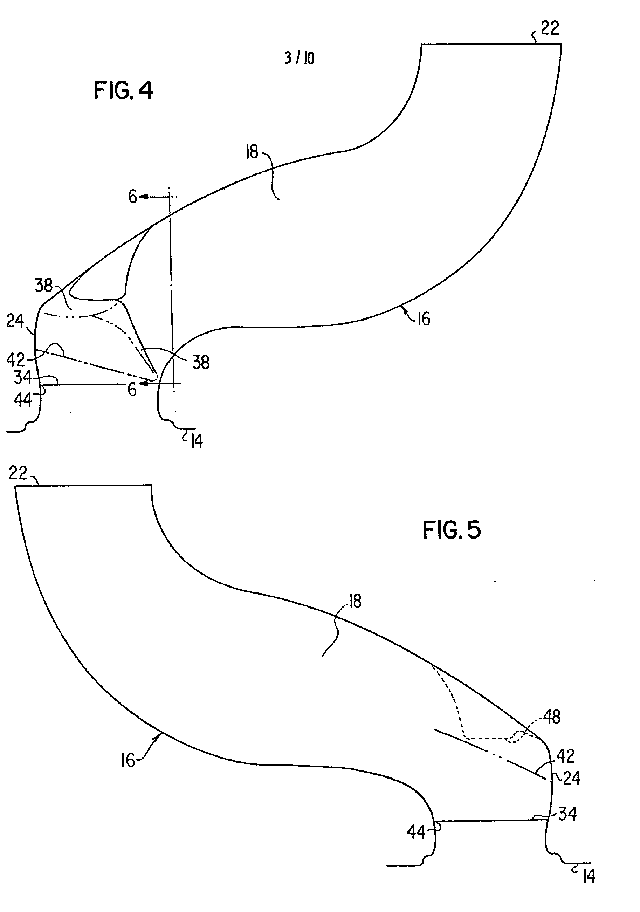

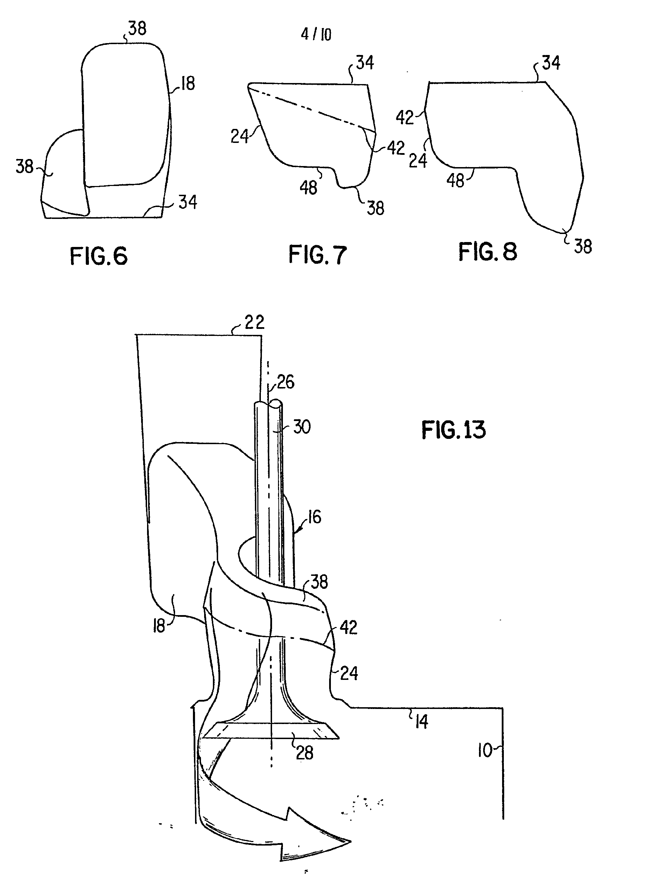

Figs. 4 and 5 are right side and left side views respectively of the intake port 16. Fig. 4 shows the manner in which the top surface 38 extends around the helical ramp portion 24, and then angles off rather sharply toward the opening 44 at the base line 34 to terminate the helical ramp portion 24. This can also be seen in the sectional view of Fig. 6. Fig. 6 depicts the outline of the back portion 18 but does not attempt to show any of the details which would be visible within the intake port. Fig. 5 shows the manner in which the dashed line 42 extends around one side of the helical ramp portion 24 as well as the general outline of the mound 48 formed by a portion of the top surface 38.

Figs. 7 and 8 are sectional views of the intake port 16 taken along the lines 7-7 and 8-8 respectively of Fig. 3. As such, Figs. 7 and 8 represent two different slices of the helical ramp portion 24 taken at right angles to each other. As in the case of the sectional view of Fig. 6, Figs. 7 and 8 attempt to depict only the outline of the intake port 16 and not the interior details which would normally be visible with a true sectional view. The shape of the top surface 38 as it extends from the back portion 18 into the helical ramp portion 24 and assumes a generally V-shaped cross-section is depicted in both Fig. 7 and Fig. 8. The dashed line 42 is shown in Fig. 7 to illustrate the manner in which the portion of greatest diameter extends across the helical ramp portion 24 in this particular perspective. The shape of the mound 48 and its position relative to the top surface 38 is also illustrated in Figs. 7 and 8. In Fig. 8 where the top surface 38 is approaching the transition between the back portion 18 and the helical ramp portion 24, the top surface 38 is at a substantially different elevation from the mound 48. However, in Fig. 7 which depicts the top surface 38 just after it has entered the helical ramp portion 24, the top surface 38 is at an elevation much closer to that of the mound 48.

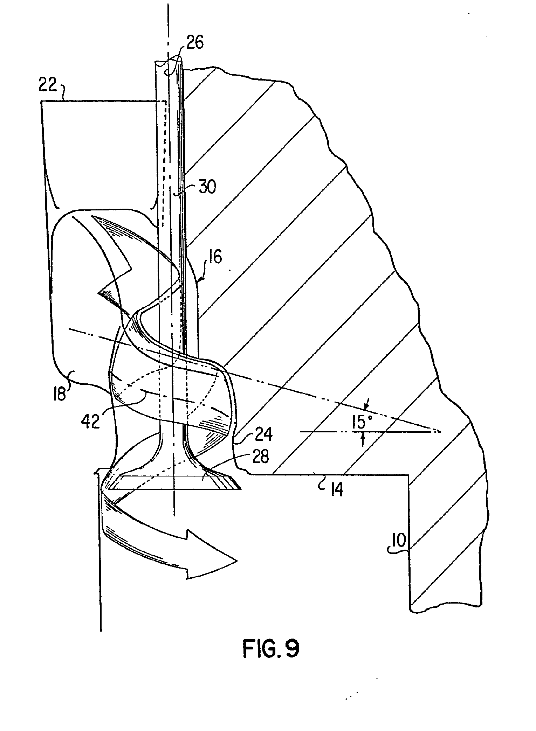

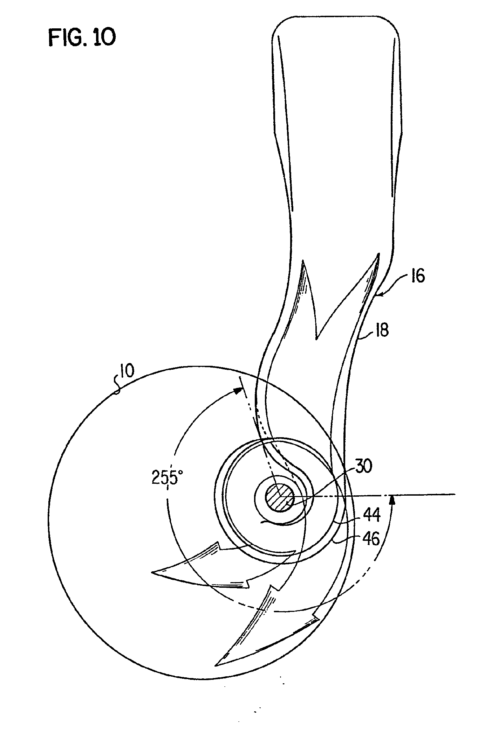

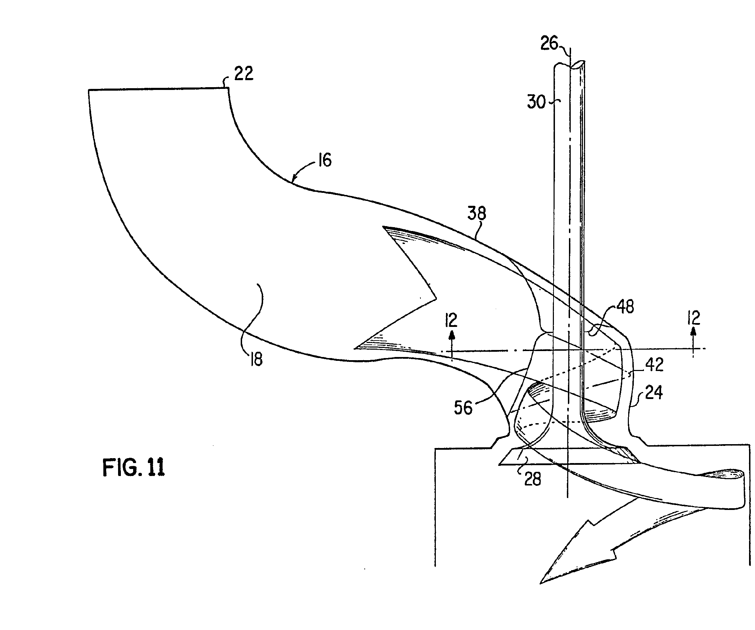

Figs. 9-12 depict conditions when the valve 28 is at a relatively small opening. Fig. 9 is a front view of the intake port 16 similar to Fig. 2 but with the valve 28 present and also showing the flow of air through the port 16. It will be seen from Figs. 9 and 10 that the intake port 16 forms a generally S-shaped passage for the air as the air travels through the back portion 18 and then into the helical ramp portion 24. At the same time, and as seen in Fig. 9, the air travels downwardly through the back portion 18 and then continues to travel downwardly as it spirals through the helical ramp portion 24. This is evident from the side view of Fig. 11 which also illustrates the manner in which the swirling air flows over the valve 28 and then continues to swirl around the inside of the cylinder 10.

In accordance with the invention the air passing through the intake port 16 has been found to enter the cylinder 10 with a substantial amount of swirl imparted thereto, even when the valve 28 is at a relatively small opening as depicted in Figs. 9-12. This appears to be due to the substantial length of the helical ramp portion 24 around the central axis 26 and the relatively shallow slope thereof. As seen in Fig. 10 the helical ramp portion 24 extends around the centr< axis 26 and the valve stem 30 through an angle of approximately 255 degrees from the point where the back portion 18 converges to form the start of the helical ramp portion 24 to the point where the helical ramp portion 24 terminates and expels the air flow through the opening 44 at the base line 34. Fig. 9 depicts the fact that the slope of the ramp portion 24 defined by the angle formed by the top surface 38 with the generally planar cylinder head 14 is approximately 15 degrees. This slope of approximately 15 degrees exists for approximately the last 200 degrees of the 255 degree length of the helical ramp portion 24. In other words, the slope of the helical ramp portion 24 from the point of termination thereof at the opening 44 to a point approximately 200 degrees upstream therefrom is approximately 15 degrees. Upstream from there and within the very first portion of the helical ramp portion 24, the slope increases to a value slightly greater than 15 degrees to accommodate the greater slope of the top surface 38 of the intake port 16. The substantial length of the helical ramp portion 24 (approximately 255 degrees) combines with the shallowness (approximately 15 degrees slope) of the helical ramp portion 24 to tend to confine the air entering the helical ramp portion 24 to the generally helical path thereof. This imparts a substantial amount of swirl to the air while at the same time minimizing direct impingement of the air on the valve 28 and the turbulence that would result therefrom. The result is that at small valve openings the air flows out of the small opening relatively smoothly and with a substantial amount of swirl which continues into the cylinder 10.

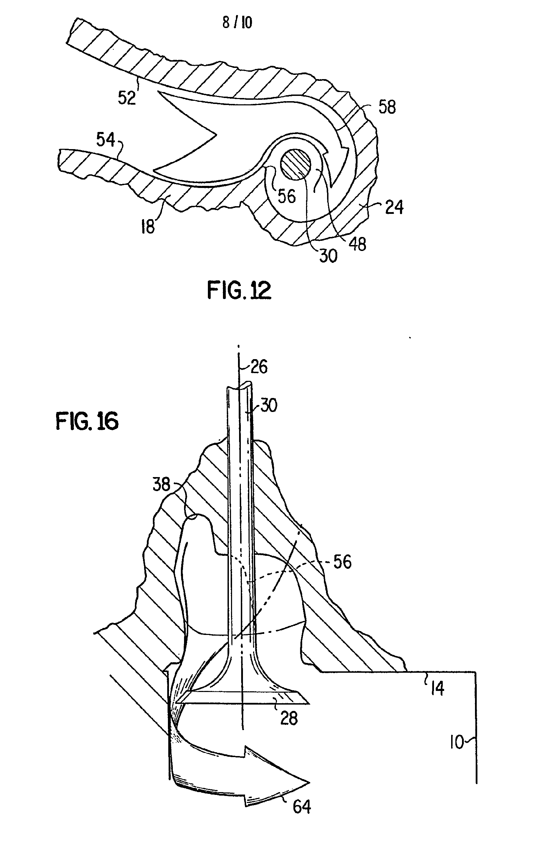

Fig. 12 depicts a further feature of the invention which greatly aids in the smooth flow of air out of the intake port 16 with a substantial amount of swirl imparted thereto at relatively small valve openings. Fig. 12 is a sectional view taken along the line 12-12 of Fig. 11. As seen in Fig. 12 the intake port 16 has a first side wall 52 and an opposite second side wall 54. The first side wall 52 follows a generally S-shaped path as it extends through the back portion 18 of the intake port 16 and then into the helical ramp portion 24 where it extends around the valve 28 and finally terminates in a relatively sharp edge 56 substantially at the bottom end of the helical ramp portion 24. The opposite second side wall 54 also extends through the back portion 18 and terminates at the edge 56 so as to join with the terminating portion of the first side wall 52. The edge 56 is adjacent and spaced apart from the valve stem 30. The second side wall 54 has a direction thereof at the edge 56 which points beyond or to the side of the valve stem 30. This causes air flowing along the second side wall 54 to bypass the valve stem 30 as the air flows around the helical ramp portion 24 as shown by an arrow 58 in Fig. 12. The side walls 52 and 54 therefore effectively form a diverter fence at the edge 56. The diverter fence forces the air to flow around rather than into the valve stem 30. At the same time, the diverter fence causes any air which circulates through the helical ramp portion 24 and does not exit from the helical ramp portion 24 to rejoin the air flowing from the back portion 18 into the helical ramp portion 24 in smooth, uninterrupting fashion. The smooth, non-turbulent flow provided by the diverter fence at the edge 56 combines with the long, shallow helical ramp portion 24 to impart a substantial amount of swirl to the air passing through the intake port 16, particularly at relatively small valve openings. The edge 56 is depicted in Fig. 11 as well as in Fig. 12.

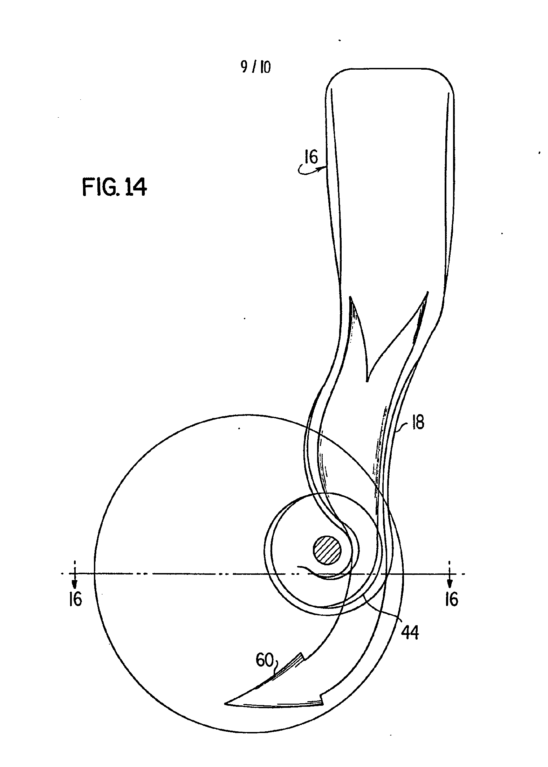

Figs. 13-16 depict a condition in which the valve 28 is at the fully opened position. As previously noted, this condition requires that a very large volume of air be drawn through the intake port 16 at high speed for swirling motion within the cylinder 10. Because the valve 28 is moved out of the way of most of the air passing through the helical ramp portion 24, the air in the helical ramp portion 24 tends to flow rather directly from the back portion 18 through the helical ramp portion 24 without following the complete spiral of the helical ramp portion 24 as in the case of small valve openings. At the same time, adequate swirl is imparted to the air by the spiral shape of the helical ramp portion 24 and particularly by the top surface 38 which is of generally V-shaped cross-section where it enters the helical ramp portion 24 and which directs incoming air to the helical ramp portion 24 around the valve stem 30 as the air proceeds through the helical ramp portion 24 and into the cylinder 10.

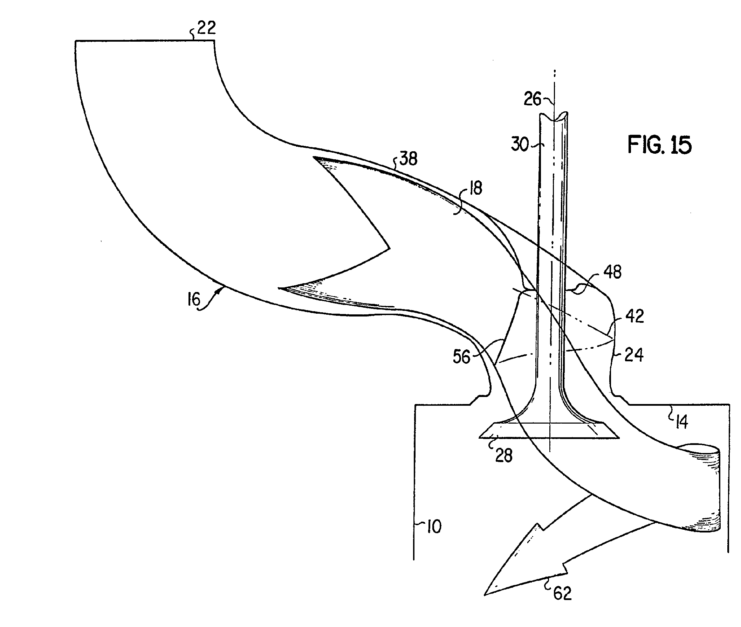

Fig. 13 comprises a front view of the intake port 16 when the valve 28 is in the fully opened position. Fig. 14 is a bottom view of the intake port 16 under such condition and depicting by way of an arrow 60 the manner in which air flows through the back portion 18, then spirals through the helical ramp portion 24 before exiting in a swirl pattern into the cylinder 10. Fig. 15 is a side view of the intake port 16 illustrating by an arrow 62 the manner in which the air flowing through the intake port 16 tends to flow rather directly through the helical ramp portion 24 rather than following the helical ramp portion 24 along its entire length. Fig. 16 is a sectional view of Fig. 14 taken along the line 16-16 thereof and again illustrating by way of an arrow 64 the manner in which air tends to flow rather directly through the helical ramp portion 24.

While the invention has been particularly shown and described with reference to a preferred embodiment thereof, it will be understood by those skilled in the art that various changes in form and details may be made therein without departing from the scope of the invention as claimed.

CLAIMS

1.    An internal combustion engine with a cylinder
terminating in a head and a helical intake port entering through
the head, characterised in that the intake port (16) comprises a
back portion (18) for receiving incoming air and which converges
into a helical ramp portion (24) having a central axis (26) and
terminating at the head (14), the helical ramp portion (24) having
a generally uniform slope and extending about the central axis
(26) through an angle not substantially less than about 255 degrees
before terminating at the head.

2.    An internal combustion engine according to claim 1,
characterised in that the helical ramp portion (24) extends about
the central axis (26) through an angle of at least 255 degrees
before terminating at the head (14).

3.    An internal combustion engine according to claim 1 or 2,
characterised in that the generally uniform slope of the helical
ramp portion (24) is not substantially greater than about 15 degrees.

4.    An internal combustion engine according to claim 1 or 2,
characterised in that the generally uniform slope of the helical
ramp portion (24) is not substantially greater than about 15 degrees
through at least 200 degrees around the central axis (26).

5.    An internal combustion engine according to claim 1, 2, 3
or 4, characterised in that the back portion (18) feeds in at an angle
substantially greater than 15 degrees.

6.    An internal combustion engine according to any of claims
1 to 5, with a valve located in the head and having a stem extending
along the central axis through the helical ramp portion of the port,
characterised in that the back portion (18) of the port has a first
side wall (54) which terminates at a location adjacent and spaced
apart from the valve stem (30), the side wall extending in such a
direction at the termination thereof as to cause air travelling along
the wall to bypass the valve stem as it enters and circulates around
the helical ramp portion (24).

7.      An internal combustion engine according to claim 6, characterised in that the back portion has a second side wall (52) opposite the first side wall (54) and which curves around the valve stem (30) to form the helical ramp portion (24) and terminates in a relatively sharp edge (56) where it joins the first side wall (54), so that air that passes through the back portion (18) and the helical ramp portion (24) and does not leave the port converges with air passing from the back portion to the helical ramp portion in relatively smooth, non-interrupting fashion.

8.      An internal combustion engine according to claim 7, characterised in that the second side wall (52) follows a generally S-shaped path as it curves through the back portion (18) of the port in one direction and then through the helical ramp portion (24) of the port in the opposite direction.

9.      An internal combustion engine according to any of claims 1 to 8 characterised in that the port has a top surface (38) opposite the head (14) which narrows into a groove (40) as it leaves the back portion (18) and enters the helical ramp portion (24), the groove having a generally V-shaped cross-section where it enters the helical ramp portion and extending around the valve stem (30).

10.     An internal combustion engine according to claim 9, characterised in that the top surface (38) is generally in the shape of a helix as it extends through the helical ramp portion (24) to the head (14).

11.     An internal combustion engine having a cylinder terminating in a head at the end thereof, an intake port coupled to the head and comprising a back portion for receiving incoming air and converging into a helical ramp portion having a central axis and terminating at the head and a valve located at the head and having a stem extending along the central axis through the helical ramp portion of the port, the back portion of the port having a first side wall which terminates at a location adjacent and spaced apart from the valve stem, the side wall extending in a direction at the termination thereof so as to cause air travelling along the wall to bypass the valve stem as it enters and circulates around the helical ramp portion.

12.     An internal combustion engine according to claim 11, wherein the back portion has a second side wall opposite the first-side wall which curves around the valve to form the helical ramp portion and terminates in a relatively sharp edge where it joins the first-side wall so that air that passes through the back portion and the helical ramp portion and does not leave the port converges with air passing from the back portion to the  helical ramp portion in relatively smooth, non-interrupting fashion.

13.     An internal combustion engine having a cylinder terminating in a head at the end thereof, an intake port coupled to the head and comprising a back portion for receiving incoming air and converging into a helical ramp portion having a central axis and terminating at the head and a valve located at the head and having a stem extending along the central axis through the helical ramp portion of the port, the port having a top surface opposite the head which narrows into a groove as it leaves the back portion and enters the helical ramp portion, the groove having a generally V-shaped cross-section where it enters the helical ramp portion and extending around the valve stem.

FIG. 1

FIG. 2

FIG. 3

FIG. 4

FIG. 5

0067700

4 / 10

FIG.6

FIG.7

FIG.8

FIG.13

FIG. 9

FIG. 10

255°

10

16

18

30

44

46

FIG. 11

7/10

0067700

FIG. 12

FIG. 16

FIG. 14

FIG. 15

10 / 10

0067700

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,D | FR-A-2 193 147 (ELSBETT)<br><br>* Page 4, lines 17-35 * & US - A - 3 890 949 | 1,2,6, 8,13 | F 02 F 1/42 |
| A,D | US-A-3 008 458 (DAIMLER BENZ)<br><br>* Column 2, lines 44-72 * | 1,5,6, 13 | |
| A,D | US-A-3 945 363 (ELSBETT)<br><br>* Column 3, lines 1-68 * | 1,8,10 ,13 | |
| A | FR-A-1 200 615 (DAIMLER BENZ) | | |
| A | FR-A-2 198 059 (ELSBETT) | | |
|  | ----- | | **TECHNICAL FIELDS SEARCHED (Int. Cl. ³)**<br><br>F 02 F |

The present search report has been drawn up for all claims

| Place of search | Date of completion of the search | Examiner |
|---|---|---|
| THE HAGUE | 08-09-1982 | WASSENAAR G. |